# EUROPEAN PATENT APPLICATION

(11) **EP 2 221 160 A1**
(43) Date of publication of application: **25.08.2010**
(21) Application number: 08851598.6
(22) Date of filing: 14.11.2008
(51) Int. Cl.: B29C 39/24, B29C 39/10, B29C 39/14, B29C 47/02, B29K 61/04, B29K 101/10, B29K 105/04, B29L 9/00

(54) **PROCESS FOR PRODUCING HEAT CURING RESIN FOAMED PLATE**

(30) Priority: 20.11.2007 JP 2007300182
(71) Applicant: Asahi Kasei Construction Materials Corporation, Tokyo 101-8101 (JP)
(72) Inventor: MIHORI, Hisashi, Tokyo 101-8101 (JP); OHKUBO, Hideaki, Tokyo 101-8101 (JP)
(74) Representative: von Kreisler Selting Werner
(86) International application number: PCT/JP2008/070803
(87) International publication number: WO 2009/066621

(57) **Abstract**

The present invention is a process for producing a thermosetting resin foamed plate, comprising a step of discharging a resin composition obtained by mixing at least a thermosetting resin, a foaming agent and a curing agent onto a surface material and foaming and curing the resin composition, wherein the resin composition is supplied into a die from a plurality of inlets of the die by a plurality of branched channels to reside, and the resin composition is discharged from a die lip outlet onto the surface material into a plate form.

## Description

### Technical Field

The present invention relates to a process for producing a thermosetting resin foamed plate.

### Background Art

As a process for producing a thermosetting resin foamed plate, a process of kneading a resin composition made of a thermosetting resin, a foaming agent, a catalyst and the like by a mixer, discharging the kneaded material onto a surface material traveling at a constant speed, and molding the material between conveyors within a curing oven is general. In this process, as a method for mixing the above-mentioned resin composition in a mixing part and extending the resin composition into a plate form, examples of use of a single discharge nozzle include a method for traversing a nozzle of a mixer, a method using a doctor blade or a doctor knife, and a method of uniformly leveling a discharged resin composition by a plurality of spatula-like weirs, but it has been difficult to efficiently and stably produce excellent articles of foamed plates having a uniform thickness in a width direction thereof for a long time by these methods.

Moreover, examples of use of a plurality of discharge nozzles include methods for branching a channel into a plurality of subchannels such as a method for supplying a resin composition onto a surface material at a predetermined interval in a straight band form using a plurality of grooves, as proposed by Patent Document 1, and a method using the so-called tournament type dispensing nozzle (a high-pressure type in Patent Document 2) as proposed by Patent Document 2. However, a thermosetting resin foamed body is produced while a reaction irreversibly progresses. Accordingly, scales easily adhere to equipment such as the branched channels and the like by any method. In addition, the scales grow with an operation time from a time when a curing catalyst is added to continuously start production. Accordingly, a difference of a degree of pollution between the branched channels also increases over time accompanying a difference of adhesion and growth of the scales caused by a slight difference of an environment between the branched channels. As a result, a flow rate difference between the plurality of channels is increased, and, therefore, it is difficult to stably obtain a thermosetting resin foamed plate having a uniform thickness in the width direction thereof for a long time only by branching of the channel.

In products obtained using a plurality of discharge nozzles, a plurality of streaks (junction marks of a resin composition discharged by a plurality of channels) extended in a thickness direction often remain in a cross section in the width direction of the products, therefore, it has also been desired to improve appearance.

Patent Document 3 has proposed a method for dispensing a mixture from a mixing part by a plurality of tubes, binding other end of the branched mixture arranged in parallel within a plane on a discharge side in a proper extension state by a restricting member, and discharging the mixture. Also in this method, however, it is assumed that a flow rate of the dispensed mixture within the plurality of tubes is uniform. A discharging apparatus of Patent Document 3 has an environmental difference between the tubes attributed to a curvature difference between the arranged tubes, therefore, the discharging apparatus has no way taking measures when such a difference occurs in the flow rate of the mixture within the tube between the tubes in production of a thermosetting resin composition. Accordingly, by the method, products having a uniform thickness in the width direction cannot be produced stably for a long time.

As a method for extending a mixed resin composition in a direction perpendicular to a running direction of a surface material that travels from a mixer, a method for molding the resin into a plate or thin film form by a T die extruding method, which is generally used in film production of a thermoplastic resin, is also considered. However, because the resin composition flowed into the T die from one point is extended in a die discharge width direction, a difference in a discharge flow rate of the resin composition occurs between discharged positions in the die discharge width direction. This causes a difference in a residence time within a die, increasing a tendency of local adhesion and growth of the scale within the die. As a result, it is difficult to attain uniform discharge in the die discharge width direction stably for a long time, the T die extruding method is generally considered unsuitable for production of a thermosetting resin foamed plate on which a thermosetting resin is discharged while a reaction progresses.

In such a background, a technique for efficiently and stably producing a thermosetting resin foamed plate having a uniform thickness in the width direction for a long time has been strongly desired.

[Patent Document 1]: Japanese Patent Application Laid-Open No. 04-141406
[Patent Document 2]: Japanese Patent No. 3243571
[Patent Document 3]: Japanese Patent Application Laid-Open No. 2000-127218

### Disclosure of the Invention

An object of the present invention is to improve thickness unevenness accuracy in a width direction of a thermosetting resin foamed plate in production of the thermosetting resin foamed plate, and to efficiently and stably produce a thermosetting resin foamed plate having a uniform thickness in the width direction (a small difference in the maximum thickness in the width direction) for a long time.

As a result of extensive research by the present inventors in order to efficiently and stably produce a thermosetting resin foamed plate for a long time in a simpler manner and with higher accuracy than in the case of the conventional method, it was found out that the above-mentioned problem can be achieved by supplying a resin composition obtained by mixing at least a thermosetting resin, a foaming agent and a curing agent into a die from a plurality of channels, integrating the resin composition into one by residence of the resin composition within the die, and discharging the integrated resin composition onto a surface material from a discharge outlet of a die lip. Thus, the present invention has been completed.

Namely, the present invention is a process for producing a thermosetting resin foamed plate, comprising a step of discharging a resin composition obtained by mixing at least a thermosetting resin, a foaming agent and a curing agent onto a surface material and foaming and curing the resin composition, wherein the resin composition is supplied into a die from a plurality of inlets of the die by a plurality of branched channels to reside, and the resin composition is discharged from a die lip outlet onto the surface material into a plate form.

In the present invention, preferably, a slit width (t) of the die lip outlet and a length (D) of the die in a flow direction of the resin composition satisfy 5 ≤ D/t ≤ 1200.

In the present invention, preferably, an internal die pressure of the resin composition (gage pressure) is not less than 0.002 MPa and not more than 0.1 MPa at a position 10 mm upstream of a central part in a width direction of the die lip outlet.

In the present invention, preferably, the thermosetting resin is a phenol resin.

### Effect of the Invention

According to the present invention, in production of a thermosetting resin foamed plate, a thermosetting resin foamed plate having a uniform thickness in a width direction can be produced efficiently and stably for a long time.

### Brief Description of the Drawings

Figure 1 is a schematic view showing a constructional example of a die used for the present invention;
Figure 2 is a schematic view of a die used for the present invention observed from the die top plate side;
Figure 3 is a schematic view of a die used for the present invention observed from the die top plate side; and
Figure 4 is an explanatory view of a plurality of streaks extended in a thickness direction in a widthwise cross section of a foamed resin plate obtained by the conventional process for production.

### Description of Symbols

1 ... die top plate, 2 ... die bottom plate, 3 ... die rear plate, 4 ... die side plate, 5 ... inlet, 6 ... pressure sensor mounting position, 7 ... die lip outlet, 10 ... die front plate, 100 ... die, 200 ... foamed products (thermosetting resin foamed plate), L ... die lip outlet width, D ... length of die in flow direction of resin composition, t ... slit width of die lip outlet, X ... flow direction of foamed products, Y ... width direction of foamed products, a ... streak

### Best Modes for Carrying Out the Invention

Hereinafter, the present invention will be described with reference to the drawings.

A process for producing a thermosetting resin foamed plate according to the present invention is a process for producing a thermosetting resin foamed plate by discharging a resin composition onto a surface material and foaming and curing the resin composition, **characterized in that** the resin composition is supplied into a die from a plurality of inlets of the die by a plurality of branched channels to reside, and the resin composition is discharged from a die lip outlet onto the surface material into a plate form.

In the present invention, a thermosetting resin foamed body is a foamed body made of a thermosetting resin such as phenolic resin foam and urethane foam, and is obtained by foaming and curing a resin composition obtained by adding proper amounts of a foaming agent and a curing agent to the thermosetting resin. A surfactant, a plasticizer, an extender and the like can also be added to the resin composition if necessary. The thermosetting resin foamed plate without the surface material in a surface layer part of such a thermosetting resin foamed body can also be produced by separating the surface material or slicing the thermosetting resin foamed plate in the production process.

The resin composition according to the present invention is obtained by mixing at least a thermosetting resin, a foaming agent and a curing agent using a mixer including stirring means, for example. While the mixer is not limited in particular, mixers that can stir the above-mentioned components efficiently in a short time are preferable. For example, the so-called pin mixer, Hobart type batch mixer, or Oaks type continuous mixer (Japanese Patent Publication No. 40-17143) can be used, those mixers having a structure in which a rotator having a number of wings (projections) rotate inside of a cylindrical container having a number of projections in an inner wall thereof, and rotate between the projections with rotation of the rotator without the wings contacting the projections.

The surface material used in the present invention is not particularly limited, but a flexible surface material is preferable. Particularly, from points of easiness to deal with a foamed plate and economical efficiency, synthetic fiber nonwoven fabrics and papers are most preferable.

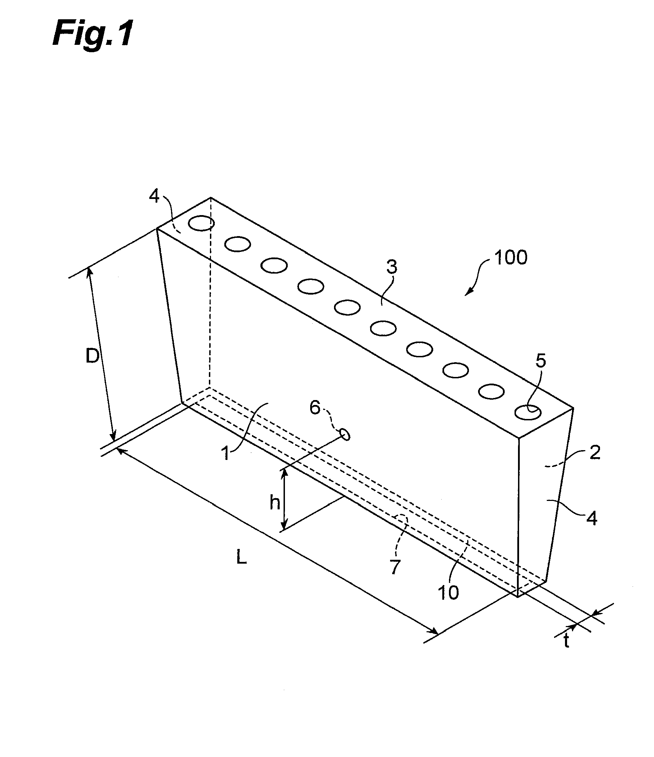

Examples of the die used in the present invention include a die as shown in Figure 1. In Figure 1, the die 100 is formed of 6 plates of a die top plate 1 and a die bottom plate 2 facing each other, a die rear plate 3 adjacent to the die top plate 1 and the die bottom plate 2, die side plates 4, 4 facing each other and are adjacent to the die top plate 1, the die bottom plate 2 and the die rear plate 3, a die front plate 10 facing the die rear plate 3. The die top plate 1, the die bottom plate 2 and the die side plates 4, 4 may have a plane of a rectangular shape, or may have a curved surface. The die rear plate 3 is on an inlet side of the resin composition, and a plurality of inlets 5 are formed at an arbitrary interval. The plurality of inlets 5 are formed from one end to the other end in a width direction of the die 100. A plurality of branched channels from the mixer are connected and fixed to the inlets 5. The die front plate 10 is on an outlet side of the resin composition, and one open space (die lip outlet 7) having a rectangular shape is formed.

The resin composition is supplied into the die 100 from the plurality of inlets 5, and is integrated into one by residing in the inside of the die 100. The resin composition is leveled uniformly in the width direction of the die 100, and subsequently is discharged from the die lip outlet 7 onto the surface material that travels. The die 100 and the surface material may move relatively to each other. As long as the resin composition flown into the die 100 from the inlet 5 can reside within the die 100, the die top plate 1, the die bottom plate 2 and the die side plates 4, 4 do not always need to be closed completely. For example, the inlet of the resin composition may be formed in the die top plate 1, the die bottom plate 2 or the die side plates 4, 4. The inlet does not always need to be formed only in the die rear plate 3. For example, the inlet may be formed only in the die top plate 1 or the die bottom plate 2, or may be formed in any two of the die top plate 1, the die bottom plate 2 and the die rear plate 3, or may be formed in all of the three plates. In this case, the inlet is preferably formed close to the die rear plate 3 in the die top plate 1 or the die bottom plate 2. One inlet may be formed in each above-mentioned plate of the die 100, or a plurality of inlets arranged in a row may be formed in each above-mentioned plate of the die 100.

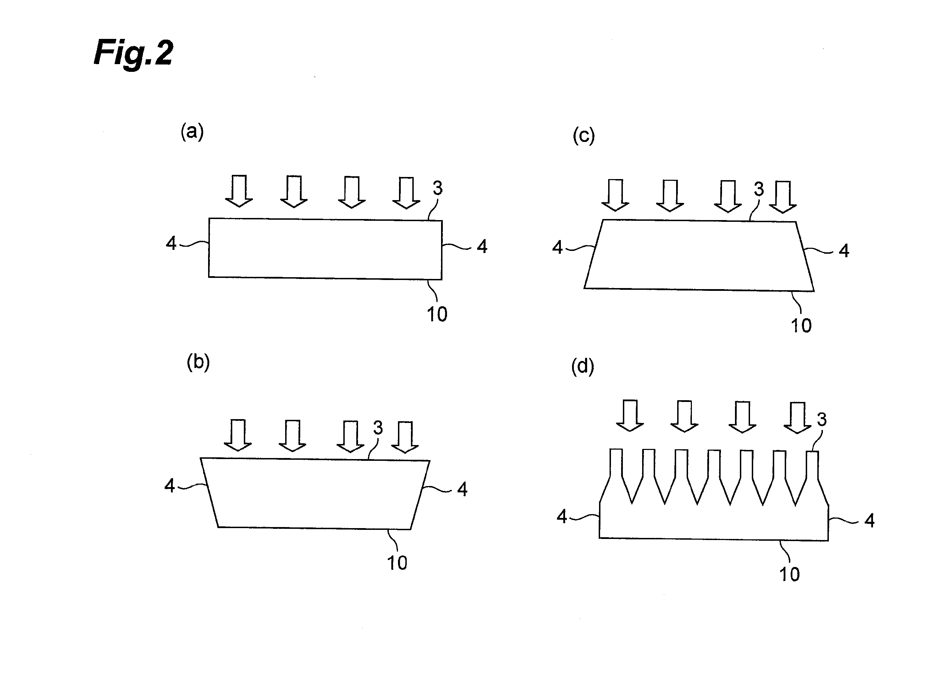

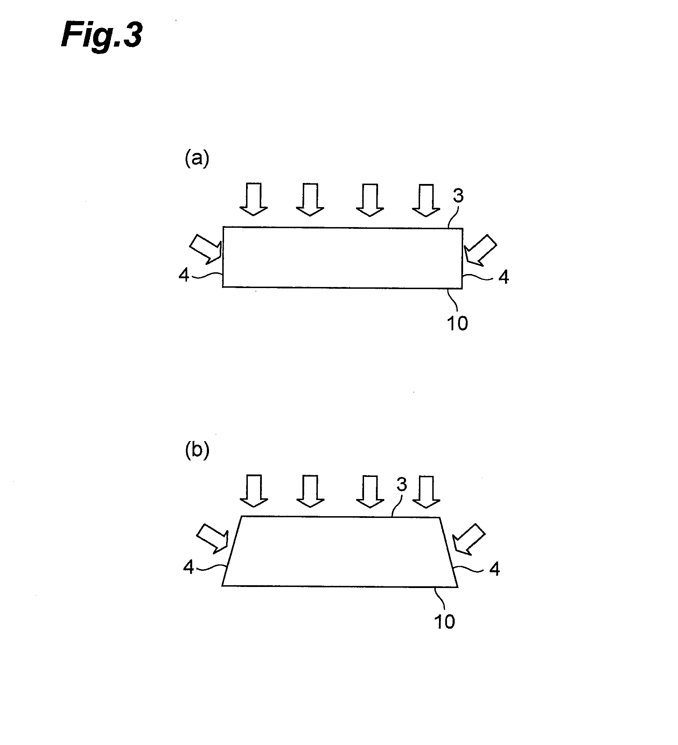

A shape and size of the die 100 used in the present invention are not limited in particular, and can be changed according to a production purpose or production conditions. Examples of the shape of the die 100 include shapes shown in Figure 2 and Figure 3. Figure 2 and Figure 3 are schematic views of the die 100 observed from the die top plate 1 side. In Figure 2 and Figure 3, the resin composition is supplied into the die 100 from the direction shown by arrows.

As the shape of the die 100, preferably, the die rear plate 3 and the die front plate 10 are approximately perpendicular to the flow direction of the resin composition (direction from the inlet 5 to the die lip outlet 7), as shown in Figure 2. Examples of the shape of the die 100 include: (a) a shape in which the die side plates 4, 4 are approximately parallel to the flow direction of the resin composition, (b) a shape in which the die side plates 4, 4 are inclined in the flow direction of the resin composition so that the width of the die rear plate 3 may be larger than the width of die front plate 10, (c) a shape in which the die side plates 4, 4 are inclined in the flow direction of the resin composition so that the width of the die front plate 10 may be larger than the width of the die rear plate 3, and (d) a shape in which the die rear plate 3 is an irregular surface having depressions and projections in the width direction of the die 100, and the inlet 5 is formed at the top of each projection. In this case, an area of each inlet 5 is set larger than a cross-section area of each of the channels branched from the mixer, for example.

In order to reduce an influence of lateral resistance, within the scope without deviating from thought of the present invention, the inlet may be formed in the die side plates 4, 4 in addition to the die rear plate 3, and the thermosetting resin may be flown also from the die side plates 4, 4, as shown in Figure 3. Examples of the shape of the die 100 include: (a) a shape in which the die side plates 4, 4 are approximately parallel to the flow direction of the resin composition, (b) a shape in which the die side plates 4, 4 are inclined in the flow direction of the resin composition so that the width of the die front plate 10 may be larger than the width of the die rear plate 3, as shown in Figure 3.

The material of the die 100 used in the present invention is not limited in particular, but the material hard to transform by an internal die pressure is preferable. When the slit width (t) of the die lip outlet widens in the width (L) direction (particularly a central part in the width direction of the die lip outlet 7) of the die lip outlet due to a clam shell phenomenon and the like, the thickness of the thermosetting resin foamed plate in the width direction becomes uneven, and it is difficult to obtain excellent articles. According to strength of the material and the internal die pressure, a reinforcing plate for preventing the clam shell phenomenon that sandwiches the die top plate 1 and the die bottom plate 2 can be attached to an arbitrary position in the flow direction of the resin composition along the width (L) direction of the die lip outlet. Further, if necessary, a plurality of adjustment mechanisms may be attached in the width direction of the die lip outlet 7 to adjust the slit width (t) of the die lip outlet. Moreover, a temperature of the main body of the die 100 may be controlled if necessary using a heating medium or the like.

In the die 100 used in the present invention, in order to measure the internal die pressure, a pressure sensor (gage pressure measuring instrument) is preferably situated at a position 6, which is located h = 10 mm upstream of the central part in the width direction of the die lip outlet 7 (on the inlet 5 side of the resin composition) (see Figure 1). In this case, the internal die pressure can be measured at a position in which the resin composition resides. The pressure sensor is situated on an inner wall of the die top plate 1 within the die 100, for example. Moreover, a displacement measurement sensor (a contact type, a noncontact type) or a dial gage may be attached to arbitrary several positions of the die top plate 1 so as to measure a state of the slit width (t) of the die lip outlet 7 by measuring displacement of the die lip outlet 7 at the time of discharge of the resin composition.

As long as the resin composition that flows into the die 100 from the inlet 5 can reside within the die 100, the slit width (t) of the die lip outlet 7 is not limited in particular, but when this slit width (t) is too narrow and the internal die pressure increases, the so-called clam shell phenomenon occurs. When a maximum difference of the slit width (t) of the die lip outlet 7 is increased between parts of the die lip outlet 7 in the width direction due to this phenomenon, thickness unevenness of the obtained thermosetting resin foamed plate in the width direction is increased so that it is difficult to obtain excellent articles. Examples of countermeasures can include increase in rigidity of the main body of the die 100 (for example, a die plate).

In the present invention, in the upstream channel of the resin composition flown into the die 100, the resin composition is flown into the die 100 after distributing to some extent (dispensed into a plurality of parts) in a direction perpendicular to a traveling direction on the surface material to be flown into the die 100 from the viewpoint of making the leveling effect by residence of the resin composition within the die 100 effective even when the width of the die 100 is wide. The method for dispensing into a plurality of parts is not limited in particular. An interval of the inlet 5 is preferably at an equal interval, but the interval of the inlet 5 does not always need to be at an equal interval, depending on conditions such as an area of an opening of the inlet 5, and viscosity of the resin as long as the resin composition can be distributed to some extent in the direction perpendicular to the traveling direction on the surface material.

The thickness of the thermosetting resin foamed plate obtained in the present invention is not limited in particular, and can be changed by adjusting a flow rate of the resin composition supplied from the mixer and the slit width (t) of the die lip outlet 7. In order to make the thickness of the foamed plate uniform in the width direction, the slit width (t) of the die lip outlet 7 and the length (D) of the die 100 in the flow direction of the resin composition (the minimum distance from a position of supply of the plurality of branched channels into the die 100 (position of the inlet 5) to a position of the die lip outlet 7. Hereinafter, it is only written as "the length of die.") preferably satisfy 5 ≤ D/t ≤ 1200, more preferably 8 ≤ D/t ≤ 1000, and particularly preferably 15 ≤ D/t ≤ 500.

When a sectional shape of the die rear plate 3 has approximately an circular arc, for example, and the D cannot be uniquely determined, the length (D) of the die 100 (each minimum distance from a position of supply of the plurality of branched channels into the die 100 (position of the inlet 5) to a position of the die lip outlet 7) preferably satisfy the above-mentioned formula.

In order to make the thickness of the foamed plate uniform in the width direction, other than the flow rate of the resin composition and the slit width (t) of the die lip outlet 7, the length (D) of the die 100 and the like are adjusted to control the internal die pressure, thereby, foamed products with desired thickness accuracy can be obtained.

In the present invention, the internal die pressure of the resin composition is preferably not less than 0.002 MPa and not more than 0.1 MPa at the position 6 located h = 10 mm upstream of the central part in the width direction of the die lip outlet 7, and more preferably not less than 0.003 MPa and not more than 0.085 MPa. An excessively high internal die pressure (exceeding 0.1 MPa, for example) increases the flow rate (linear velocity) of the resin composition from the die lip outlet 7, therefore, discharge of the resin composition is tend to be unstable particularly in the vicinity of both sides in the width (L) direction of the die lip outlet 7, and the shape of both ends of the thermosetting resin foamed plate is tend to be irregular. Further, the scale is likely to adhere to the periphery of the die lip outlet 7 in this case, and that may affect the thickness of the foamed plate. On the other hand, an excessively low internal die pressure (pressure less than 0.002 MPa, for example) is hard to enhance the leveling effect by residence, therefore, it is tend to be difficult to obtain the foamed plate having a uniform thickness in the width direction stably for a long time.

Depending on a purpose of use, the maximum thickness difference in the width direction of the obtained foamed plate is preferably not more than 2.0 mm, and more preferably not more than 1.0 mm.

Thus, as a characteristic of the present invention, the resin composition flown into the die 100 is once housed within the die 100 in the inlet 5 so as to be distributed in the width (L) direction of the die lip outlet 7, and subsequently discharged from the die lip outlet 7 while being leveled uniformly in the width direction of the die 100. In this method, at early stages of operation (for example, 3 hours after start up), the thermosetting resin foamed plate having a uniform thickness in the width direction can be obtained, and a density in the width direction is also uniform. Similarly, the foamed plate having a uniform thickness can be obtained even after long-time operation (for example, 10 hours after start up). According to this method, an amount of discharge of the resin composition is even by residence and leveling of the resin composition within the die 100 even when an amount of the resin composition flown from the inlet 5 into the die 100 becomes uneven following a difference in the amount of discharge due to scale dirt in the inlet channel caused by the reaction in progress during operation, which is unique to thermosetting resins, therefore, the thermosetting resin foamed plate having a uniform thickness in the width direction can be obtained stably for a long time.

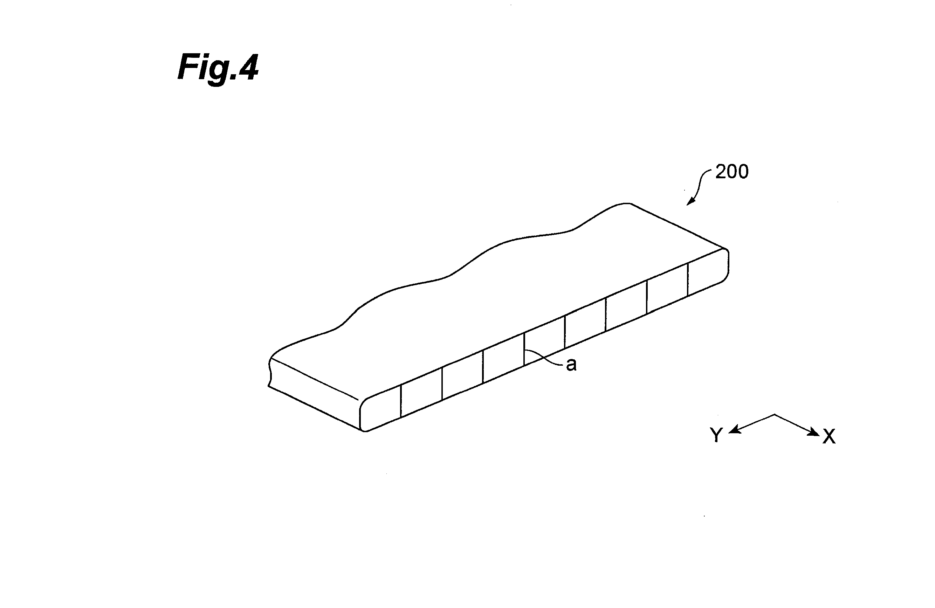

In the present invention, when the die lip outlet 7 is formed into one rectangular shape, a plurality of streaks a (junction marks of the resin composition discharged by the plurality of channels; see Figure 4) extended in the thickness direction of the widthwise cross section of the foamed product (thermosetting resin foamed plate) 200 as observed at the time of use of a plurality of general discharge nozzles are not recognized, therefore, the foamed product 200 has good appearance. Further, because unevenness of the density in the thickness direction is small and density distribution is uniform in the thickness direction, the foamed body product having no local reduced strength in the thickness direction and higher compressive strength can be obtained. Moreover, compared with sliced articles of the thermosetting resin foamed plate obtained by the conventional production method, sliced articles obtained by cutting the foamed products produced by the present method in the thickness direction into a plurality of sheets have a small difference in the density between the sliced articles, and hardly deform due to warp. Accordingly, the foamed plate produced by the present method can be sliced in the thickness direction to obtain multiple foamed products as equal foamed plate products. According to a purpose, the surface material may be attached to this sliced article after slicing to produce a foamed plate product with the surface material.

### Examples

Next, while the present invention will be described in detail using Examples and Comparative Examples, the present invention will not be limited to these. Hereinafter, a phenol resin will be described as an example of the thermosetting resin.

### <Synthesis of a phenol resin>

Into a reactor, 3500 kg of 52 wt% formaldehyde and 2510 kg of 99 wt% phenol were placed, and stirred by a propeller rotating type stirrer. A temperature of the solution within the reactor was adjusted at 40°C by a temperature controller. Next, the temperature was raised while an aqueous solution of 50 wt% of sodium hydroxide was added, and the reaction was performed. At a stage that Ostwald viscosity reached 60 centistokes (= 60 × 10⁻⁶ m²/s, a measured value at 25°C), the reaction mixture was cooled, and 570 kg of urea (equivalent to 15 mol% of formaldehyde added) was added. Subsequently, the reaction mixture was cooled to 30°C, and was neutralized to pH of 6.4 by a 50 wt% aqueous solution of p-toluenesulfonic acid monohydrate.

When this reaction mixture was dehydrated at 60°C and the viscosity of the reaction mixture was measured, the viscosity at 40°C was 5,800 mPa·s. This is referred to as a phenol resin A-U.

### (Example 1)

A block copolymer of ethylene oxide and propylene oxide (made by BASF, Pluronic F-127) was mixed as a surfactant in a ratio of 2.0 parts by weight based on 100 parts by weight of the phenol resin A-U. A resin composition, which was made of 7 parts by weight of a mixture of 50 wt% of isopentane and 50 wt% of isobutane as a foaming agent and 11 parts by weight of a mixture of 80 wt% of xylene sulfonic acid and 20 wt% of diethylene glycol as an acid curing catalyst based on 100 parts by weight of this phenol resin, was supplied to a mixer whose temperature was controlled at 25°C so that a resin flow rate after mixing might be 52 kg/hr. The resin composition was flowed into a die from a channel branched into 16 from the mixing part by a dedicated tournament type dispensing pipe and connected to each inlet of the die at a predetermined interval (the die formed of six plates consisting of a top plate, a bottom plate, both side plates, a rear plate, and a front plate, and having a die lip outlet formed in the front plate corresponding to the discharge side and the channels branched from the mixing part connected to the rear plate corresponding to the inlet side. The material; SUS304, width of the die lip outlet; L = 1000 mm, length of the die; D = 150 mm, slit width of the die lip outlet; t = 4.0 mm.). The resin composition was discharged from the die lip outlet into a plate form, and supplied onto a bottom surface material that traveled. Moreover, a pressure sensor was attached onto the top plate of the die at a position 10 mm upstream of the die lip outlet in the central part in the width direction of the die lip outlet.

As the surface material, nonwoven fabric made of polyester (made by Asahi Kasei Fibers Corporation, "spunbond E05030," a weight of 30 g/m², and a thickness of 0.15 mm) was used.

The resin composition supplied onto the bottom surface material was covered with a top surface material, and subsequently the resin composition was sent to an 85°C slat-type double conveyor with being sandwiched between the top and bottom surface materials, and cured for residence time of 15 minutes. Subsequently, the resin composition was heated in a 110°C oven for 2 hours to obtain a foamed plate.

### (Example 2)

Except that the slit width (t) of the die lip outlet was 1.5 mm, the foamed plate was obtained in the same manner as in Example 1.

### (Example 3)

Except that the slit width (t) of the die lip outlet was 0.3 mm and the length of the die (D) was 300 mm, the foamed plate was obtained in the same manner as in Example 1.

### (Example 4)

Except that the slit width (t) of the die lip outlet was 10.0 mm and the length of the die (D) was 50 mm, the foamed plate was obtained in the same manner as in Example 1.

### (Example 5)

Except that the flow rate of the resin supplied from the mixer was changed into 156 kg/hr, the temperature of the slat type double conveyor was 68°C, the residence time was 50 minutes and the slit width (t) of the die lip outlet was 7.0 mm, the foamed plate was obtained in the same manner as in Example 1.

### (Example 6)

Except that the slit width (t) of the die lip outlet was 2.0 mm and an apparatus in which channels branched into eight from the mixer by a dedicated tournament type dispensing pipe were connected to the inlets of the die was used, the foamed plate was obtained in the same manner as in Example 1.

### (Example 7)

Except that a method by the so-called comb type nozzle having a large number of holes opened in a straight pipe in a row was used instead of the plurality of branched channels, the foamed plate was obtained in the same manner as in Example 1.

### (Example 8)

Except that the slit width (t) of the die lip outlet was 0.2 mm and the length of the die (D) was 300 mm, the foamed plate was obtained in the same manner as in Example 1.

### (Example 9)

Except that the slit width (t) of the die lip outlet was 12.0 mm and the length of the die (D) was 50 mm, the foamed plate was obtained in the same manner as in Example 1.

### (Comparative Example 1)

Except that the resin composition was directly discharged to the bottom surface material from a dedicated tournament type dispensing pipe without using the die, the foamed plate was obtained in the same manner as in Example 1.

The properties of the resin composition according to the present invention and a method for evaluating the obtained foamed plate will be described.

### [Viscosity of the resin composition]

Using a rotational viscometer (made by Toki Sangyo Co., Ltd., R-100 type, and a rotor part of 3° × R-14), a measured value after stabilizing the resin composition for 3 minutes at 40°C was employed.

### [Density of the foamed plate]

A density of the foamed plate was a value obtained by using the foamed plate of a 20 cm square as a sample, removing the surface material of this sample, and measuring a weight and apparent volume of the sample. The density was measured according to JIS-K-7222.

### [Fraction of closed cells in the foamed plate]

A cylindrical sample having a diameter of 35 mm to 36 mm was cut out from the foamed plate by a cork borer, and cut so as to have a height of 30 mm to 40 mm, subsequently a volume of the sample was measured according to the standard method for using an air comparison type densimeter (made by Tokyo Science Co., Ltd., 1,000 type). The fraction of the closed cell was a value obtained as follows: a volume of a void wall calculated from the weight of the sample and a resin density was subtracted from the volume of the sample, and the value was divided by an apparent volume calculated from an outer size of the sample. Measurement was performed according to ASTM-D-2856. Here, in the case of a phenol resin, the density thereof was 1.3 kg/L.

### [Thermal conductivity of the foamed plate]

The foamed plate of a 200 mm square was used as a sample. According to a flat plate heat flow meter method of JIS-A-1412, the thermal conductivity was measured using a low temperature plate at 5°C and a high temperature plate at 35°C.

### [Presence of streaks in a cross section in the width direction of the foamed plate]

Presence of a plurality of streaks (junction marks of the resin composition discharged from the plurality of channels; see Figure 4) extended in the thickness direction in the cross section in the width direction of the foamed plate was visually evaluated.

### [Measurement of a thickness in the width direction of the foamed plate]

The width of the obtained foamed plate is measured and a central position of the width direction is determined. Both sides of the foamed plate were marked at an interval of 20 mm from this center position to end sides in the width direction. A thickness of the marked positions was measured by vernier calipers, and an average thickness and the maximum difference in the thickness in the width direction were determined. Measurement was performed on the foamed plates obtained after 3 hours, 10 hours, and 20 hours after start up, respectively.

### [Overall evaluation]

Three-level evaluation was performed on the physical properties of the obtained foamed body products.
⊚; Excellent articles having thickness unevenness of not more than 0.8 mm were continuously obtained from start up for not less than 20 hours. ○; Excellent articles having thickness unevenness of not more than 1.0 mm were continuously obtained from start up for not less than 20 hours. △; Excellent articles having thickness unevenness of not more than 1.0 mm were continuously obtained from start up for not less than 10 hours. ×; Excellent articles having thickness unevenness of not more than 1.0 mm were continuously obtained from start up for not less than 3 hours, but excellent articles having thickness unevenness of not more than 1.0 mm could not be continuously obtained from start up for not less than 10 hours.

Tables 1 and 2 show the flow rate of the resin composition, the number of channels from the mixer (the number of inlets connected and fixed to the channels), the interval of the die lip outlet, the internal die pressure, and the evaluation results of the obtained foamed plates (all of the evaluation results are evaluation results after 20 hours from addition of the curing catalyst to start continuously production (start up) unless specified), where are used for the above-mentioned Examples and Comparative Examples.

**[Table 1]**

| | Flow rate of resin (kg/hr) | Number of channels on die inlet side | Slit width (set value before operation; mm) | D/t | Internal die pressure (MPa) |
|---|---|---|---|---|---|
| Example 1 | 52 | 16 | 4.0 | 37.5 | 0.015 |
| Example 2 | 52 | 16 | 1.5 | 100 | 0.032 |
| Example 3 | 52 | 16 | 0.3 | 1000 | 0.081 |
| Example 4 | 52 | 16 | 10.0 | 5.0 | 0.003 |
| Example 5 | 156 | 16 | 7.0 | 21.4 | 0.047 |
| Example 6 | 52 | 8 | 2.0 | 75.0 | 0.032 |
| Example 7 | 52 | 16 | 4.0 | 37.5 | 0.014 |
| Example 8 | 52 | 16 | 0.2 | 1500 | 0.096 |
| Example 9 | 52 | 16 | 12.0 | 4.2 | 0.002 |
| Comparative Example 1 | 52 | - | - | - | - |

**[Table 2]**

| | Foamed products | | | | | | | | |
|---|---|---|---|---|---|---|---|---|---|
| | Density (kg/m³) | Fraction of closed cells (%) | Thermal conduc-tivity (W/m·K) | Streak in cross section in width direction of product | Average thick-ness (mm) | Maximum thickness difference in width direction (after 3 hours: mm) | Maximum thickness difference in width direction (after 10 hours: mm) | Maximum thickness difference in width direction (after 20 hours: mm) | Overall evaluation |
| Example 1 | 26.9 | 98 | 0.018 | No | 25.1 | 0.3 | 0.3 | 0.4 | ⊚ |
| Example 2 | 27.2 | 98 | 0.018 | No | 25.2 | 0.4 | 0.4 | 0.5 | ⊚ |
| Example 3 | 27.3 | 97 | 0.018 | No | 24.9 | 0.6 | 0.6 | 0.8 | ⊚ |
| Example 4 | 26.8 | 98 | 0.018 | No | 25.3 | 0.4 | 0.5 | 0.9 | ○ |
| Example 5 | 27.0 | 97 | 0.019 | No | 75.2 | 0.4 | 0.4 | 0.5 | ⊚ |
| Example 6 | 27.2 | 97 | 0.018 | No | 25.2 | 0.5 | 0.5 | 0.6 | ⊚ |
| Example 7 | 27.1 | 98 | 0.018 | No | 25.1 | 0.4 | 0.4 | 0.5 | ⊚ |
| Example 8 | 27.4 | 96 | 0.019 | No | 24.8 | 0.7 | 0.8 | 1.2 | △ |
| Example 9 | 27.1 | 97 | 0.019 | No | 25.4 | 0.4 | 0.6 | 1.2 | △ |
| Comparative Example 1 | 27.2 | 96 | 0.019 | Yes | 25.3 | 0.5 | 1.1 | 2.3 | × |

### Industrial Applicability

A foamed plate according to the present invention is used as a heat insulator for building, and the like.

## Claims

1. A process for producing a thermosetting resin foamed plate, comprising a step of discharging a resin composition obtained by mixing at least a thermosetting resin, a foaming agent and a curing agent onto a surface material and foaming and curing the resin composition, wherein the resin composition is supplied into a die from a plurality of inlets of the die by a plurality of branched channels to reside, and the resin composition is discharged from a die lip outlet onto the surface material into a plate form.

2. The process for producing a thermosetting resin foamed plate according to claim 1, wherein a slit width (t) of the die lip outlet and a length (D) of the die in a flow direction of the resin composition satisfy 5 ≤ D/t ≤ 1200.

3. The process for producing a thermosetting resin foamed plate according to claim 1, wherein an internal die pressure of the resin composition is not less than 0.002 MPa and not more than 0.1 MPa at a position 10 mm upstream of a central part in a width direction of the die lip outlet.

4. The process for producing a thermosetting resin foamed plate according to any one of claims 1 to 3, wherein the thermosetting resin is a phenol resin.
